# FASCICULE DE BREVET EUROPEEN

(11) **EP 1 090 380 B1**
(45) Date de publication et mention de la délivrance du brevet: **02.10.2002**
(21) Numéro de dépôt: 99957207.6
(22) Date de dépôt: 21.06.1999
(51) Int. Cl.: G08G 1/123, H04B 1/08

(54) **SYSTEME D'INFORMATIONS DE L'USAGER DANS LES TRANSPORTS EN COMMUN**
INFORMATIONSSYSTEM FÜR PASSAGIERE EINES VERKEHRSMITTELS
USER INFORMATION SYSTEM IN PUBLIC TRANSPORT

(30) Priorité: 22.06.1998 FR 9807856
(43) Date de publication de la demande: 11.04.2001
(73) Titulaire: Regie Autonome des Transports Parisiens RATP, 75012 Paris (FR)
(72) Inventeur: CHESNOY, Alain, F-94360 Bry sur Marne (FR); AMPELAS, André, F-75007 Paris (FR)
(74) Mandataire: Ballot, Paul
(86) Numéro de dépôt international: FR9901485
(87) Numéro de publication internationale: WO99067762

(56) Documents cités:
- DE-A- 3 925 001
- FR-A- 2 723 458
- US-A- 5 243 659

## Description

L'invention définie dans les revendications concerne les transports en commun et, plus particulièrement, un système d'informations à distance de l'usager des unités de transport en commun tels que les bus. Le document FR-A-2 723 458 divulgue un tel système.

Les machinistes de bus sont en liaison radio permanente avec leur centre ou station de rattachement de manière à pouvoir communiquer toutes informations utiles dans les deux sens. Une telle liaison n'est pas destinée à l'usager de sorte que ce dernier est isolé pendant tout le trajet, notamment en ce qui concerne les incidents éventuels sur le parcours emprunté par le bus, incidents qui peuvent retarder son heure d'arrivée.

En outre, l'usager peut être intéressé à recevoir pendant son trajet certaines autres informations relatives à son environnement local telles que les représentations théâtrales, les projections de films, les publicités commerciales ou simplement les prévisions météorologiques locales.

Enfin, si les informations d'intérêt immédiat ou local indiquées ci-dessus sont épuisées, l'usager peut vouloir écouter de la musique classique ou moderne, ce qu'il ne peut faire qu'en ayant son propre appareil de réception et d'écoute.

Un but de la présente invention est donc de mettre en oeuvre un système d'informations dans les bus et, plus généralement dans les transports en commun, pour mettre à la disposition de l'usager des sources d'informations lui donnant des informations relatives à son trajet, à son environnement local journalier ou encore d'intérêt général.

Ce système d'informations selon l'invention comprend :
- un émetteur radioélectrique à bord de chaque unité de transport en commun qui transmet des informations audio fournies par l'opérateur de transport en commun, et
- un récepteur radioélectrique pour usager du transport en commun apte à recevoir au moins les émissions de l'émetteur radioélectrique à bord de chaque unité de transport en commun,
- ledit émetteur radioélectrique diffusant des informations à fréquence audio relatives au transport en cours ou d'intérêt plus général, lesdites informations étant mises à jour de temps à autre par un dispositif.

Dans une première variante, le récepteur radioélectrique de l'usager est également apte à recevoir les émissions radioélectriques des réseaux de radio-diffusion et il comprend, à cet effet, un commutateur manuel pour sélectionner soit 1'émission de l'émetteur radioélectrique à bord de chaque unité de transport, soit l'émission d'un réseau de radio-diffusion.

De préférence, le récepteur radioélectrique de l'usager comprend un premier récepteur radioélectrique apte à ne recevoir que les émissions radioélectriques de l'émetteur de bord et un deuxième récepteur radioélectrique apte à ne recevoir que les émissions radioélectriques des réseaux de radio-diffusion, le commutateur manuel réalisant la commutation entre la sortie de l'un ou l'autre récepteur.

Dans une deuxième variante, le ou les récepteurs radioélectriques de l'usager sont associés à un module de passage sans contact de l'usager soit en les intégrant dans le module, soit en les enfermant dans un boîtier séparé qui est ensuite connecté au module de passage sans contact.

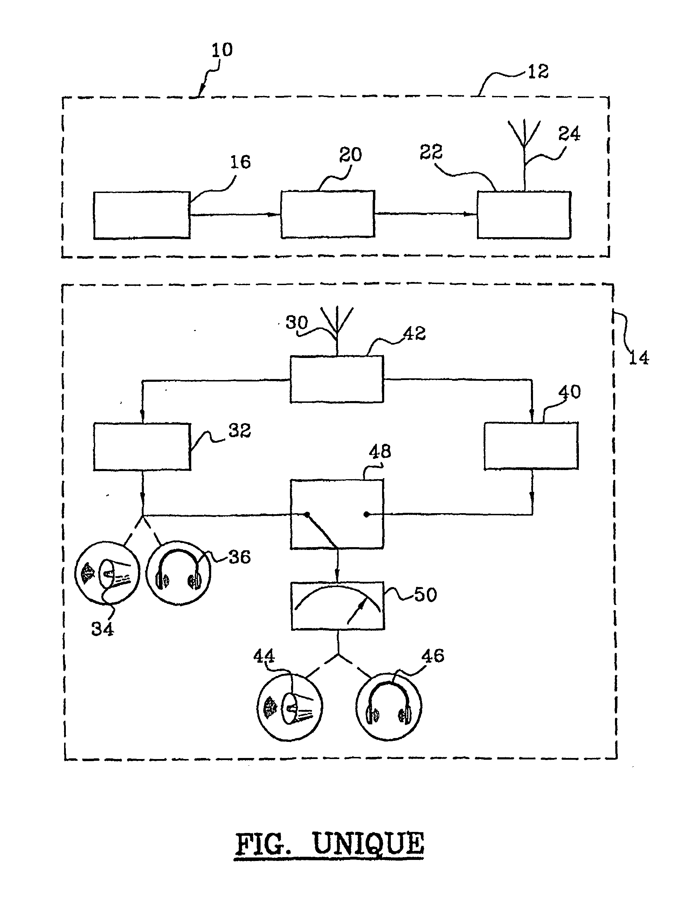

D'autres caractéristiques et avantages de la présente invention apparaîtront à la lecture de la description suivante d'un exemple particulier de réalisation, ladite description étant en relation avec le dessin joint dans lequel la figure unique est un schéma fonctionnel d'un système d'informations de l'usager de transport en commun selon l'invention.

Un système d'informations 10 de l'usager de transport en commun selon l'invention comprend :
- un émetteur radioélectrique 12 disposé à bord de chaque unité de transport en commun tel qu'un bus, un train ou une rame de métro, et
- un récepteur radioélectrique 14 pour usager de transport en commun.

L'émetteur radioélectrique 12 comprend une source d'informations à fréquence audio 16 donnant des informations audio qui sont relatives au transport en cours ou concernant tout autre type d'information d'intérêt pour l'usager telles que les représentations théâtrales ou les projections de films. Ces informations peuvent être sous la forme d'enregistrements qui sont mis à jour de temps à autre de différentes manières, par exemple par téléchargement.

Les informations à la fréquence audio sont appliquées à un modulateur 20 dont le signal de sortie est appliqué à un émetteur proprement dit 22 muni d'une antenne d'émission 24. De préférence, le modulateur 16 est du type à modulation de fréquence.

Le récepteur radioélectrique 14 comprend au moins une antenne 30 pour capter les émissions radioélectriques de l'émetteur 11 et un récepteur 32 proprement dit adapté à recevoir et démoduler les émissions radioélectriques et à amplifier les signaux électriques à fréquence audio. Ces derniers signaux électriques alimentent soit un haut-parleur 34, soit de préférence un ou des écouteurs 36.

Dans le cas d'une modulation de fréquence, la fréquence centrale d'émission sera par exemple choisie dans la bande libre de 433,920 Mhz et la puissance d'émission ne devra pas dépasser la puissance autorisée pour cette bande.

Dans cette forme simplifiée de l'invention, l'usager n'aura accès qu'aux informations fournies par l'opérateur du transport en commun via l'émetteur radioélectrique 12.

Afin de permettre à l'usager de disposer d'une plus large gamme de sources d'informations, l'invention propose d'associer à ce premier récepteur radioélectrique 32 un deuxième récepteur radioélectrique 40 apte à recevoir les émissions radioélectriques des réseaux de radiodiffusion.

Ce deuxième récepteur radioélectrique 40 reçoit les émissions radioélectriques par l'intermédiaire de l'antenne 30 et si nécessaire d'un filtre 42.

De préférence, ce récepteur radioélectrique 40 est du type à modulation de fréquence dans la bande dite commerciale de 88 MHz à 108 MHz.

Les signaux à fréquence audio fournis par les récepteurs 32 et 40 appliqués à un haut-parleur 44 ou de préférence à un écouteur 46, par l'intermédiaire d'un commutateur 48 et d'un dispositif de réglage de volume du son 50. Le commutateur 48, sous le contrôle de l'usager permet à ce dernier de sélectionner soit les signaux de sortie du récepteur 32, soit les signaux de sortie du récepteur 40.

Les éléments du récepteur radioélectrique 14 peuvent être disposés dans un boîtier équipé d'une pile électrique d'alimentation, boîtier que l'usager peut acheter.

Les éléments 30 à 36 ou 30 à 50 peuvent être aussi disposés dans un boîtier qui est associé à un dispositif de passage sans contact dont est muni l'usager pour accéder au réseau de transport en commun.

Dans ce cas, le boîtier et le dispositif de passage seront munis d'accessoires pour permettre leur combinaison mécanique et électrique.

Le boîtier indépendant ou le boîtier accessoire du dispositif de passage sans contact seront équipés de boutons de commande tels que :
- marche/arrêt du boîtier,
- sélection du récepteur de l'information de l'opérateur du transport en commun,
- sélection de l'un des réseaux de radio-diffusion,
- sélection du volume de puissance sur le haut-parleur ou l'écouteur.

Dans le cas d'un boîtier accessoire du dispositif de passage sans contact, les boutons de commande peuvent être reportés sur ce dernier.

## Revendications

1. Système d'informations à distance de l'usager dans les transports en commun, **caractérisé en ce qu'**il comprend
- un émetteur radioélectrique (12) disposé à bord de chaque unité de transport en commun destiné à fournir une information aux occupants de ladite unité de transport en commun, et
- un premier récepteur radioélectrique (14, 32) pour usager de transport en commun, apte à recevoir les émissions radioélectriques de l'émetteur radioélectrique (12),
- ledit émetteur radioélectrique (12) diffusant des informations à fréquence audio relatives au transport en cours ou d'intérêt plus général, lesdites informations étant mises à jour de temps à autre par un dispositif.

2. Système selon la revendication 1, **caractérisé en ce qu'**il comprend, en outre :
- un deuxième récepteur radioélectrique (40) apte à recevoir les émissions radioélectriques de réseaux de radiodiffusion,
- un commutateur (48) pour permettre à l'usager de choisir entre les informations à fréquence audio provenant du premier (32) ou du deuxième récepteur radioélectrique (40).

3. Système selon la revendication 2, **caractérisé en ce qu'**il comprend, en outre, un filtre (42) pour aiguiller les émissions radioélectriques reçues vers le premier (32) ou le deuxième récepteur radioélectrique (40).

4. Système selon la revendication 1, 2 ou 3,
**caractérisé en ce que** les éléments pour réaliser le premier récepteur radioélectrique (32) et éventuellement, le deuxième récepteur radioélectrique (40) sont disposés dans un boîtier unique présentant au moins un bouton de commande du commutateur (48) et équipé d'une pile électrique.

5. Système selon la revendication 4, **caractérisé en ce que** le boîtier est combiné à un dispositif de passage sans contact par des liaisons mécaniques et électriques.

6. Système selon la revendication 4, **caractérisé en ce que** le boîtier est intégré à un dispositif de passage sans contact.

## Claims

1. User remote information system in public transport, ***characterised in that*** it comprises:
- a radio transmitter (12) disposed on board each public transport unit designed to provide information for the occupants of said public transport unit, and
- a first radio receiver (14, 32) for public transport users, designed to receive the radio transmissions of the radio transmitter (12),
- said radio transmitter (12) broadcasting information at audio frequency relating to transport in progress or of more general interest, said information being updated from time to time by a device.

2. System according to claim 1, ***characterised in that*** it additionally comprises:
- a second radio receiver (40) designed to receive the radio transmissions of radio broadcasting networks,
- a switch (48) allowing the user to select the information at audio frequency coming from the first radio receiver (32) or from the second radio receiver (40).

3. System according to claim 2, ***characterised in that*** it additionally comprises a filter (42) for routing the radio transmissions received to the first radio receiver (32) or the second radio receiver (40).

4. System according to claim 1, 2 or 3, ***characterised in that*** the elements for production of the first radio receiver (32) and optionally the second radio receiver (40) are disposed in a single unit having at least one control button for the switch (48) and being equipped with an electric battery.

5. System according to claim 4, **characterised in that** the unit is combined with a device for connection without contact through mechanical and electrical connections.

6. System according to claim 4, **characterised in that** the unit is integrated in a device for connection without contact.

## Patentansprüche

1. Distanz-Informationssystem für Nutzer von Verkehrsmitteln, **gekennzeichnet durch**:
einen Funksender (12), der an Bord jeder Verkehrsmitteleinheit angeordnet ist und Information an die Insassen dieser Transportmitteleinheit liefern kann, und
einen ersten Funkempfänger (14, 32) für die Nutzer der Transportmittel, der die Funksignale des Funksenders (12) empfangen kann,
wobei der Funksender (12) Informationen mit Audiofrequenz in Bezug auf den laufenden Verkehr oder von allgemeinerem Interesse aussendet, wobei die Informationen von Zeit zu Zeit **durch** eine Einrichtung aktualisiert werden.

2. System nach Anspruch 1, **gekennzeichnet durch**:
einen zweiten Funkempfänger (40), der die Funksignale von Rundfunknetzen empfangen kann,
einen Schalter (48), der dem Nutzer erlaubt, zwischen Informationen mit Audiofrequenz zu wählen, die von dem ersten (32) oder dem zweiten Funkempfänger (40) kommen.

3. System nach Anspruch 2, **gekennzeichnet durch** ein Filter (42) zum Leiten der empfangenen Funksignale zu dem ersten (32) oder dem zweiten Funkempfänger (40).

4. System nach Anspruch 1, 2 oder 3, **dadurch gekennzeichnet , daß** die Elemente zum Realisieren des ersten Funkempfängers (32) und gegebenenfalls des zweiten Funkempfängers (40) in einem einzigen Gehäuse angeordnet sind, das wenigstens einen Schalt-Steuerknopf (48) aufweist und mit einer Batterie ausgestattet ist.

5. System nach Anspruch 4, **dadurch gekennzeichnet, daß** das Gehäuse mit einer kontaktlosen Zugangsvorrichtung über mechanische und elektrische Verbindungen kombiniert ist.

6. System nach Anspruch 4, **dadurch gekennzeichnet, daß** das Gehäuse in eine kontaktlose Zugangsvorrichtung integriert ist.
